# EUROPÄISCHE PATENTANMELDUNG

(11) **EP 1 106 417 A2**
(43) Veröffentlichungstag der Anmeldung: **13.06.2001**
(21) Anmeldenummer: 00114003.7
(22) Anmeldetag: 04.07.2000
(51) Int. Cl.: B60K 31/00, F16H 63/40, F16D 48/06

(54) **Verfahren und Vorrichtung zur Erfassung des Kupplungszustandes eines Fahrzeugs**

(30) Priorität: 08.12.1999 DE 19959062
(71) Anmelder: ROBERT BOSCH GMBH, 70442 Stuttgart (DE)
(72) Erfinder: Hellmann, Manfred, 71706 Hardthof (DE); Glasbrenner, Sascha, 75417 Muehlacker (DE)

(57) **Zusammenfassung**

Es werden ein Verfahren und Vorrichtung zur Steuerung der Antriebseinheit eines Fahrzeugs vorgeschlagen, wobei auf der Basis von Motordrehzahl und Fahrgeschwindigkeit das Vorhandensein oder Fehler des Kraftflusses im Triebsstrang des Fahrzeugs ermittelt wird und davon abhängig die Antriebseinheit gesteuert wird. Der Zustand der Kupplung wird erfaßt, nach Schließen der Kupplung in einer ersten Phase auf der Basis von von Motordrehzahl und Fahrgeschwindigkeit das Vorhandensein des Kraftschluß ermittelt und in einer zweiten Phase bei erkanntem vorhandenem Kraftschluß laufend überprüft, ob der Kraftfluß weiterhin vorhanden ist.

## Beschreibung

### Stand der Technik

Die Erfindung betrifft ein Verfahren und eine Vorrichtung zur Steuerung der Antriebseinheit eines Fahrzeugs gemäß den unabhängigen Patentansprüchen.

Verfahren und Vorrichtungen zur Steuerung der Antriebseinheiten von Fahrzeugen sind aus dem Stand der Technik in vielfältiger Abwandlung bekannt. Beispielsweise beschreibt die Veröffentlichung SAE Paper Nr. 96 10 10 "Adaptive Cruise Control, System Aspects and Development Trends, 1996" eine Geschwindigkeitsregelung unter Berücksichtigung des Abstandes zu vorausfahrenden Fahrzeugen. Dabei gibt der Fahrer über einen Bedienhebel mit den bei Fahrgeschwindigkeitsreglern üblichen Funktionen Setzen, Wiederaufnahme, Beschleunigen, etc. die Sollgeschwindigkeit des Fahrzeugs vor, die bei nicht vorhandenem Frontfahrzeug vergleichbar zu einem herkömmlichen Fahrgeschwindigkeitsregler eingeregelt wird, indem aus der Differenz zwischen Sollgeschwindigkeit und Fahrgeschwindigkeit eine Sollbeschleunigung berechnet wird. Erkennt ein Radarsystem ein vorausfahrendes Fahrzeug, werden der Abstand und die Relativgeschwindigkeit zu diesem Fahrzeug ermittelt. Die Regelaufgabe besteht in diesem Fall darin, die Relativgeschwindigkeit auf Null einzuregeln und dabei gleichzeitig einen geschwindigkeitsabhängigen Sollabstand einzuhalten. Parameter zur Bestimmung des Sollabstandes (Zeitlücke) sind vom Fahrer einstellbar. Dieser Folgeregler bestimmt aus den genannten Größen eine Sollbeschleunigung, die jedoch durch die Sollbeschleunigung des Fahrgeschwindigkeitsregelteils begrenzt wird, so daß auch in der Folgeregelung die vorgegebene Sollgeschwindigkeit nicht überschritten werden kann. Abstands- und Fahrgeschwindigkeitsregler geben je nach Betriebszustand Sollwerte für die Beschleunigung (bzw. Verzögerung) des Fahrzeugs vor, die durch Beeinflussung des Motors des Fahrzeugs und/oder der Bremsen eingestellt werden.

In der DE-A1 43 38 399 wird ein Fahrgeschwindigkeitsregler beschrieben, der auf der Basis der Differenz zwischen Soll-und Istgeschwindigkeit eine Sollbeschleunigung des Fahrzeugs vorgibt, welche durch Steuerung des Motors und/oder durch Betätigen der Radbremsen des Fahrzeugs eingestellt wird.

Derartige Regler werden bei Unterbrechung des Kraftflusses zwischen Motor und Abtrieb des Triebstrangs deaktiviert und gegebenenfalls bei Wiederherstellen des Kraftschlusses wieder (automatisch) aktiviert. Daher ist es, insbesondere bei Fahrzeugen mit Handschalter-Getrieben oder bei Systemen, bei denen keine direkte Information über den Zustand des Triebstrangs zur Verfügung steht, erforderlich, Kraftschlüssigkeit und/oder eingelegte Gangstufe sicher, zuverlässig und auf einfache Art zu erkennen.

Aus der EP 429 459 B1 ist in Verbindung mit einer Fahrgeschwindigkeitsbregrenzung bekannt, den vorhandenen bzw. das Fehlen des Kraftflusses auf der Basis der zeitlichen Ableitung des Verhältnisses aus Drehzahl und Fahrgeschwindigkeit zu erkennen. Überschreitet diese Änderung einen vorgegebenen Toleranzbereich für eine vorgegebene Zeit, wird der Begrenzer ausgeschaltet.

Diese Vorgehensweise führt in einigen Anwendungsfällen zu unerwünschten Ergebnissen, da allein die Änderung des Drehzahl/Fahrgeschwindigkeitsverhältnisses zum Beeinflussung der Steuerung herangezogen wird und zur Sicherstellung eine an sich unerwünschte Verzögerungszeit eingeführt wird.

### Vorteile der Erfindung

Besonders vorteilhaft ist, daß durch die Beobachtung der Triebsstrangverstärkung eine zuverlässige, einfache und sichere Erkennung eines eingelegten Gangs bzw. das Fehlen eines Gangs erkannt wird. Insbesondere ist vorteilhaft, daß durch das Starten der Erkennung nach Betätigen der Kupplung der Einfluss von Triebsstrangschwingungen vermindert werden.

Vorteilhaft ist ferner, daß eine laufende Überwachung der erkannten Gangstufe vorgesehen ist, so daß auch erhöhter Kupplungsschlupf oder Leerlaufzustand ohne vorherige Kupplungsetätigung erkannt wird.

Insgesamt wird somit die Steuerung der Antriebseinheit, insbesondere die Aktivierung und/oder Deaktivierung eines Fahrgeschwindigkeitsreglers abhängig vom Kraftfluß verbessert.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsschaltbild einer Steuereinheit zur Steuerung der Geschwindigkeit eines Fahrzeugs, die in Figur 2 am Beispiel eines adaptiven Fahrgeschwindigkeitsreglers (Fahrgeschwindigkeitsregler mit Abstandsregler) näher ausgeführt ist. Figur 3 zeigt die erfindungsgemäße Lösung anhand eines Zeitdiagramms darstellt.

### Beschreibung von Ausführungsbeispielen

Die erfindungsgemäße Lösung wird nachstehend anhand des bevorzugten Anwendungsfalls eines adaptiven Fahrgeschwindigkeitsreglers dargestellt. Sie wird jedoch auch in vorteilhafter Weise im Rahmen weiterer Ausführungsformen einer Fahrgeschwindigkeitssteuerung, z.B. eines herkömmlichen Fahrgeschwindigkeitsreglers, eingesetzt.

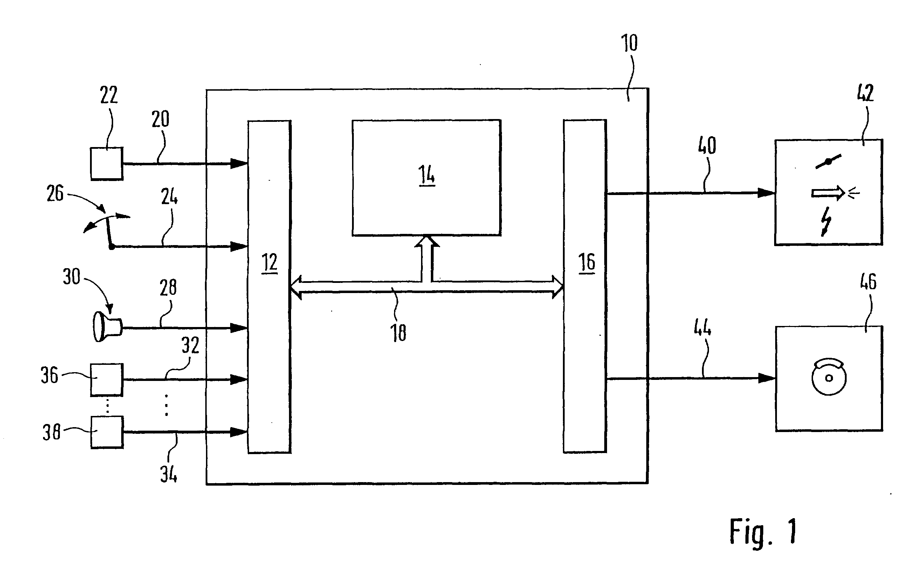

Figur 1 zeigt ein Übersichtsschaltbild einer Steuereinheit 10 für einen adaptiven Fahrgeschwindigkeitsregler. Die Steuereinheit 10 umfaßt eine Eingangsschaltung 12, wenigstens einen Mikrocomputer 14 und eine Ausgangsschaltung 16. Diese Elemente sind über ein Kommunikationssystem 18 zum Daten-und Informationsaustausch miteinander verbunden. Der Eingangsschaltung 12 sind Eingangsleitungen 20 von einer Meßeinrichtung 22 zur Erfassung der Fahrgeschwindigkeit, eine Eingangsleitung 24 von wenigstens einem vom Fahrer betätigbaren Bedienelement 26 zur Vorgabe des Betriebszustandes des Fahrgeschwindigkeitsreglers und des Sollabstandes und eine Eingangsleitung 28 von einer Abstandsmeßeinrichtung 30, vorzugsweise einem Radargerät, zugeführt. Ferner werden der Eingangsschaltung 12 weitere Eingangsleitungen 32 bis 34 von Meßeinrichtungen 36 bis 38 zur Erfassung weiterer Betriebsgrößen des Fahrzeugs, die bei der adaptiven Fahrgeschwindigkeitsregelung Verwendung finden, zugeführt. Derartige Betriebsgrößen sind beispielsweise Lenkwinkel, Querbeschleunigung, Motordrehzahl, Kupplungsschalterzustand, etc. Die Steuereinheit 10, dort der wenigstens eine Mikrocomputer 14, beeinflußt im Rahmen der adaptiven Fahrgeschwindigkeitsregelung über wenigstens eine Ausgangsleitung 40 und entsprechende Stelleinrichtungen 42 (z. B. elektronisches Motorsteuergerät) die Leistung der Antriebseinheit des Fahrzeugs. Ferner beeinflußt die Steuereinheit 10 in einem bevorzugten Ausführungsbeispiel über die Eingangsleitung 44 und entsprechenden Stellelementen 46 (z. B. einer Bremsanlage mit ABS/ASR-Elementen) die Bremskraft an den Radbremsen des Fahrzeugs.

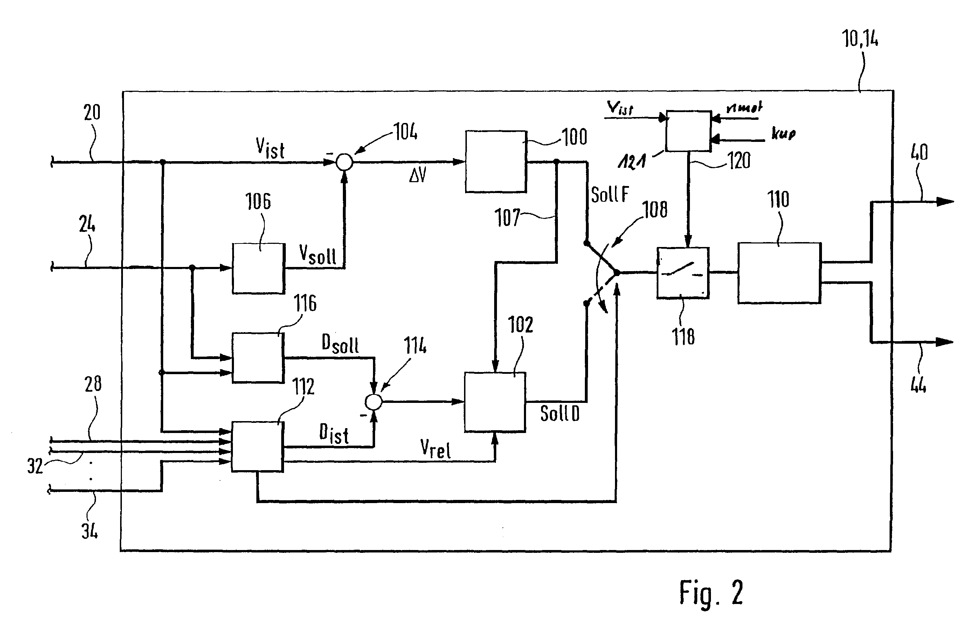

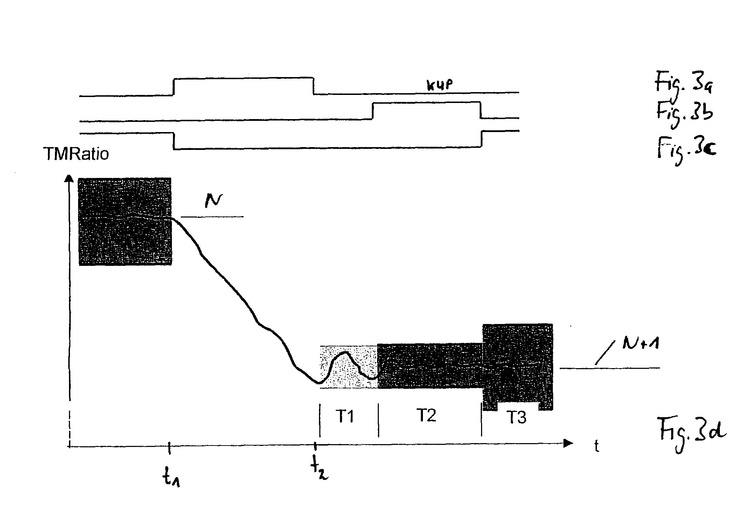

Das aus dem eingangs genannten Stand der Technik bekannte Grundprinzip der adaptiven Fahrgeschwindigkeitsregelung ist in Figur 2 anhand eines Blockschaltbildes dargelegt, welches die grundsätzlichen Zusammenhänge bei der adaptiven Fahrgeschwindigkeitsregelung darstellt. Die Realisierung dieser Fahrgeschwindigkeitsregelung erfolgt im bevorzugten Ausführungsbeispiel als ein Programm des Mikrocomputers 14, durch welche die in Figur 2 dargestellten Zusammenhänge realisiert werden.

Der dargestellte adaptive Fahrgeschwindigkeitsregler weist zwei Grundfunktionen auf, den Fahrgeschwindigkeitsregler 100 und den Abstandsregler (Folgeregler) 102. Dem in herkömmlicher Weise realisierten Fahrgeschwindigkeitsregler 100 wird von einer Vergleichsstelle 104 die Differenz ΔV zwischen der Sollgeschwindigkeit Vₛₒₗₗ und der Istgeschwindigkeit Vᵢₛₜ zugeführt. Die Sollgeschwindigkeit Vₛₒₗₗ wird dabei abhängig von dem Betätigungszustand des Bedienelements 21 in einer Auswahlstufe 106 bestimmt. So wird beispielsweise im Betriebszustand Setzen der aktuelle Istgeschwindigkeitswert als Sollgeschwindigkeit übernommen, im Betriebszustand Beschleunigen zeitlich veränderliche Rampen der Sollgeschwindigkeit vorgegeben, etc. Das vom Fahrgeschwindigkeitsregler 100 in Abhängigkeit der Geschwindigkeitsdifferenz nach Maßgabe einer vorgegebenen Regelstrategie (z.B. PD-Regelung) gebildete Ausgangssignal SollF wird an ein Schaltelement 108 und über die Leitung 107 an den Regler 102 abgegeben. Das Schaltelement 108 leitet je nach Schaltstellung das Ausgangssignal SollF des Fahrgeschwindigkeitsreglers oder das Ausgangssignal SollD des Abstandsreglers über eine Begrenzungsstufe 118 an eine Auswahlstufe 110. Letztere bildet abhängig vom zugeführten Ausgangssignal ein Steuersignal zur Beeinflussung der Motorleistung (Ausgangsleitung 40) und/oder der Bremskraft (Ausgangsleitung 44).

Die Abstandsregelung umfaßt eine Auswahlstufe 112, die in Abhängigkeit der über die Eingangsleitung 28 zugeführten Signale der Radareinheit, der Istgeschwindigkeit und weiterer über die Leitungen 32 bis 34 zugeführte Größen, wie z. B. Lenkwinkel, Gierrate, Beschleunigung des Fahrzeugs, etc. das relevante Fahrzeug, welches als Frontfahrzeug zur Abstandsregelung zu verwenden ist, ermittelt. Dabei wird der zu erwartende Kurs des Fahrzeugs z.B. anhand der Geschwindigkeit und des Lenkwinkels bestimmt. Der Radarsensor liefert den Abstand zu den erfaßten Objekten, deren relative Geschwindigkeit und den Winkel zu den verschiedenen Objekten, so daß aus einem Vergleich der gelieferten Daten mit dem zu erwartenden zukünftigen Kurs des Fahrzeugs das relevante Fahrzeug ausgewählt wird. Dann werden die vom Radarsensor ermittelten Werte für den Abstand Dᵢₛₜ zum relevanten Fahrzeug und dessen Relativgeschwindigkeit Vᵣₑₗ ausgegeben. Der Istabstand wird einer Vergleichsstufe 114 zugeführt, in der die Differenz zwischen dem vom Fahrer vorgegebenen Sollabstand Dₛₒₗₗ und dem ermittelten Istabstand gebildet und dem Regler 102 zugeführt wird. Diesem wird ferner von der Auswahlstufe 112 die Relativgeschwindigkeit übermittelt. Der Sollabstand zum relevanten vorausfahrenden Fahrzeug wird in einer Auswahlstufe 116 in Abhängigkeit eines Betätigungssignals des Fahrers, welches den Sollzeitabstand zum vorausfahrenden Fahrzeug in Sekunden festlegt, und der Istgeschwindigkeit ermittelt. Der Regler 102 bildet ein Ausgangssignal SollD, mit welchem sowohl die Abstandsdifferenz als auch die relative Geschwindigkeit des vorausfahrenden Fahrzeugs gegen 0 geführt wird. Damit der Abstandsregler die vorgegebene Sollgeschwindigkeit nicht überschreiten kann, wird ihm die Sollgröße der Fahrgeschwindigkeitsreglers 100 zugeführt. Das Ausgangssignal SollD wird dem Schaltelement 108 zugeführt. Dieses Schaltelement wird von der Auswahlstufe 112 in die strichliert gezeichnete Stellung umgeschaltet, wenn ein vorausfahrendes Fahrzeug erkannt wurde, zu dem der Abstand einzustellen ist. Dies bedeutet, daß der Fahrgeschwindigkeitsregler 100 gemäß seinen Eingangsgrößen Motorleistung und Bremsleistung bestimmt, wenn kein Fahrzeug zur Abstandsregelung ermittelt wurde, während bei erkanntem vorausfahrendem Fahrzeug der Abstandsregler 102 Motorleistung bzw. Bremsleistung steuert. Die Auswahlstufe 110 entscheidet abhängig vom zugeführten Sollwert, der im wesentlichen einer Sollbeschleunigung bzw. Verzögerung entspricht, ob die Motorsteuerung oder die Bremsensteuerung aktiviert wird. Reicht eine Reduktion der Motorleistung zum Einhalten der Sollverzögerung nicht aus, so werden die Bremsen aktiviert, andernfalls wird die Verzögerungssteuerung über eine Steuerung der Motorleistung durchgeführt.

In 121 wird in Abhängigkeit von Motordrehzahl (nmot), Fahrgeschwindigkeit (vist) und dem Kupplungsschalterzustand (kup) ein Signal für das Vorhandensein oder Fehler des Kraftschlusses gebildet. Dieses Signal schaltet über die Leitung 120 den Schalter 118 und somit die Wirkung des Reglers oder den Regler selbst (nicht dargestellt) aus.

Die in 121 durchgeführte Vorgehensweise ist in Figur 3 anhand eine Zeitdiagramms dargestellt. Die Realisierung erfolgt als Programm eines Rechner, was aus den nachfolgenden Ausführungen ableitbar ist.

In Figur 3a ist der zeitliche Verlauf des Kupplungsschalterzustands, in Figur 3b ein Symbol für die Phase der Kraftschlußerkennung und in Figur 3c ein Symbol für die Phase der Kraftschlußüberprüfung aufgetragen. Figur 3d zeigt den zeitlichen Verlauf der Strangverstärkung TMRatio. Dargestellt ist der Wechsel von einem Gang N zu einem Gang N+1.

Nach dem Schließen der Kupplung (Figur 3a, Zeitpunkt t2; wird über den Kuppelungspedalschalter erfaßt) wird nach einer Totzeit T1 in einer ersten Phase eine Gangstufenerkennung durchgeführt (vgl. Figur 3b). Dazu wird die ermittelte Strangverstärkung (TmRatio=2*pi*nₘₒₜ/V_{Fzg}) im Zeitraum T2 mit den sich aus den möglichen Getriebe-Übersetzungsverhältnissen ergebenen Strangverstärkungen (TMRatio_{GS}) verglichen. Für eine gültige Erkennung der Gangstufe muß die Strangverstärkung im Zeitraum T2 innerhalb eines applizierbaren Bandes um einen der möglichen Werte liegen. Zur Verbesserung der Gangstufenerkennung im Zeitraum T2 können Triebstrangschwingungen, wie sie nach Schließen der Kupplung auftreten, durch geeignete Maßnahmen, z.B. Tiefpaßfilter oder Medianfilter, gedämpft werden.

Im darauffolgenden Zeitraum T3 wird die im Zeitraum T2 erkannte Strangverstärkung, bis zum erneuten Betätigen der Kupplung auf das Unter- bzw. Überschreiten von applizierbaren Grenzwerten überwacht (vgl. Figur 3c). Auch hier können Triebstrangschwingungen, wie sie bei ruckartigem Betätigen des Gaspedals auftreten können, durch geeignete Maßnahmen (z.B. Tiefpaßfilter oder Medianfilter) gedämpft werden. Mit dieser Art der Überwachung werden erhöhter Kupplungsschlupf, wie sie bei alten oder defekten Kupplungen auftreten können, und Leerlaufzustand, ohne vorher betätigte Kupplung, erkannt werden.

Ferner wird auf der Basis der ermittelten Ganginformation ermittelt, ob sich das Fahrzeug im Rückwärtsgang oder in niedrigen Gängen befindet. Ist dies der Fall, wird die Aktivierung des Fahrgeschwindigkeitsreglers verboten.

## Patentansprüche

1. Verfahren und Vorrichtung zur Steuerung der Antriebseinheit eines Fahrzeugs, wobei auf der Basis von Motordrehzahl und Fahrgeschwindigkeit das Vorhandensein oder Fehler des Kraftflusses im Triebsstrang des Fahrzeugs ermittelt wird und davon abhängig die Antriebseinheit gesteuert wird, dadurch gekennzeichnet, daß der Zustand der Kupplung ermittelt wird, nach Schließen der Kupplung in einer ersten Phase auf der Basis von von Motordrehzahl und Fahrgeschwindigkeit das Vorhandensein des Kraftschluß ermittelt wird und in einer zweiten Phase bei erkanntem vorhandenem kraftschluß laufend überprüft wird, ob der Kraftfluß weiterhin vorhanden ist.

2. Verfahren nach Anspruch 1, dadurch gekennzeichnet, daß auf der Basis von Motordrehzahl und Fahrgeschwindigkeit die Strangverstärkung ermittelt wird und auf deren Basis das Vorhandensein oder Fehler des Kraftflusses im Triebsstrang des Fahrzeugs ermittelt wird.

3. Verfahren nach Anspruch 1, dadurch gekennzeichnet, daß während der erste Phase in einem ersten Zeitraum nach Schließen der Kupplung die ermittelte Strangverstärkung mit den sich aus den möglichen Getriebe-Übersetzungsverhältnissen ergebenen Strangverstärkungen verglichen wird, wobei das Vorhandensein des Kraftflusses erkannt wird, wenn die Strangverstärkung in diesem Zeitraum innerhalb eines vorgebbaren Bandes um einen dieser Werte liegt.

4. Verfahren nach Anspruch 1, dadurch gekennzeichnet, daß die in der ersten Phase erkannte Strangverstärkung auf das Unter- bzw. Überschreiten von applizierbaren Grenzwerten überwacht wird.

5. Verfahren nach Anspruch 1, dadurch gekennzeichnet, daß bei Vorhandensein des Kraftflusses ein Fahrgeschwindigkeitsregler automatisch wiedereingeschaltet wird.

6. Verfahren nach Anspruch 1, dadurch gekennzeichnet, daß ermittelt wird, ob sich das Fahrzeug im Rückwärtsgang oder in niedrigen Gängen befindet, wobei in diesemn Fall die Aktivierung des Fahrgeschwindigkeitsreglers verboten wird.

7. Vorrichtung zur Steuerung der Antriebseinheit eines Fahrzeugs, mit Mitteln, die auf der Basis von Motordrehzahl und Fahrgeschwindigkeit das Vorhandensein oder Fehler des Kraftflusses im Triebsstrang des Fahrzeugs ermitteln und davon abhängig die Antriebseinheit steuern, dadurch gekennzeichnet, daß Mittel vorgesehen sind, die den Zustand der Kupplung erfassen, nach Schließen der Kupplung in einer ersten Phase auf der Basis von von Motordrehzahl und Fahrgeschwindigkeit das Vorhandensein des Kraftschluß ermitteln und in einer zweiten Phase bei erkanntem vorhandenem kraftschluß laufend überprüfen, ob der Kraftfluß weiterhin vorhanden ist.
